# EUROPEAN PATENT SPECIFICATION

(11) **EP 3 011 166 B1**
(45) Date of publication and mention of the grant of the patent: **27.02.2019**
(21) Application number: 14814407.4
(22) Date of filing: 20.06.2014
(51) Int. Cl.: F03B 13/18, F03D 5/06

(54) **WAVE/TIDAL&WIND ENERGY CONVERTERS**
WELLEN-, GEZEITEN- UND WINDENERGIEWANDLER
CONVERTISSEURS D'ÉNERGIE VAGUE/MARÉE ET VENT

(30) Priority: 20.06.2013 DK 201300188
(43) Date of publication of application: 27.04.2016
(73) Proprietor: Mølhede Pedersen, Mogens, 5683 Harby (DK); Mølhede Loving, Michael, 2000 Frederiksberg (DK); Mølhede Pedersen, Christina, 5884 Gudme (DK)
(72) Inventor: Mølhede Pedersen, Mogens, 5683 Harby (DK); Mølhede Loving, Michael, 2000 Frederiksberg (DK); Mølhede Pedersen, Christina, 5884 Gudme (DK)
(74) Representative: Zacco Denmark A/S
(86) International application number: PCT/DK2014/000035
(87) International publication number: WO 2014/202082

(56) References cited:
- EP-A2- 2 469 073
- WO-A1-01/73291
- WO-A1-2007/019607
- US-A- 5 899 664
- US-A1- 2002 146 321
- US-A1- 2009 224 553
- US-A1- 2011 316 283

## Description

### Field of invention

The invention relates to an energy installation capable of the capture and transforming of kinetic energy from the motion of a passing fluid medium such as water or air, in particular the invention relates to an energy installation capable of capturing kinetic energy carried by wind, waves or tides, more in particular the invention captures kinetic energy by the use of one or more aerofoil profiles which are made oscillate due to a passing fluid medium or made oscillate due to a passing wave.

### Background of invention

Windmills have been around for thousands of years and have used the energy as described above. Most known mills have rotating blades, usually with a horizontal axis, others use a vertical axis. Many have a high efficiency and are utilized extensively for power generation, such as offshore wind turbines.

The use of differently shaped floats and profiles are known and used in many wave installations, often in connection with the float moving up and down in the waves. Common to these systems is that the larger the wave modes are the greater the effect. Therefore, many of these installations are placed out at sea, where there are high wave conditions.

Prior art include: US201131283 A1 (Finnigan, Thimothy, Donegal) 2011.12.29 as well as: U.S. 7665966 B2 (Warszewski, Jarolov) 2010.02.23.

A problem with the above installations is that they do not simultaneously take advantage of impulses from both the vertical and the horizontal components of flowing particles.

### Summary of invention

In one embodiment of the invention, the current invention relates to a wave and tidal energy installation, consisting of a horizontal profile which is symmetrical and statically balanced mounted, a vertical profile having a symmetrical or asymmetrical aerofoil shape. Said profile may be directly or indirectly attached to a lever arm and the lever arm is attached to a support structure.

In one embodiment of the wave and tidal installation, the horizontal profile and the vertical profile are merged into one entity.

In one embodiment of the invention, the current invention relates to a wind energy installation using symmetric or asymmetric aerofoil shaped profiles vertically and horizontally mounted directly or indirectly on a substantially horizontal lever arm. The lever arm is designed so that it may pivot in the horizontal direction as well as a number of degrees in a vertical direction.

The profiles are designed such that they may rotate around their longitudinal axis in a vertical or horizontally direction relative to the lever arm respectively. Thereby it is possible to change their respective angle of incidence in relation to a passing current of particles and thereby it may be achieved that the lever arm performs a oscillating movements in a horizontal plane and in a vertical plane wherein said profiles sweep back and forward between a first and second position in a horizontal direction and in a vertical direction.

The above described movement can be compared to the movement of the tail of a fish or a whale.

In one embodiment, the invention comprises a vertical profile and no horizontal profile.

In one embodiment, the invention comprises more than one vertical profile. Said profile may be oriented in parallel to each other.

In one embodiment, the invention comprises only a horizontal profile and no vertical profile.

In one embodiment, the invention comprises more than one horizontal profile. Said profiles may be oriented in parallel to each other or in front of each other.

In one embodiment, the horizontal profile or profiles may be tilted in a plane perpendicular the longitudinal direction of the lever arm.

In one embodiment, the lever arm is attached to the vertical profile at both ends of a longitudinal axis or centre mass axis of said vertical profile.

In any one of the embodiments, the lever arm may have two or more degrees of freedom in that it is designed so it can pivot in a horizontal direction and in a vertical direction. The lever arm may also be lowered or lifted in relation to the support structure e.g. by a hydraulic or mechanic means or any other means known in the prior art. The pivot movements of the lever arm may be transferred to the supporting construction and into a machine housing where a transmission system may be situated. Said transmission system may then further be coupled with a generator, pump or like energy consuming unit.

The horizontal profile and the vertical profile may be mounted directly or indirectly on the support structure, said profiles are designed in such a way that they may rotate about a vertical or horizontal axis relative to the lever arm respectively, thereby it is achieved that said profiles are able to change the angle of incidence in relation to a passing fluid medium and it is thereby achieved that the deflection of said lever arm may be changed to make said lever arm oscillate between a first and a second horizontal positions or between a first and a second vertical positions as a fluid medium passes said horizontal or vertical profiles.

A fluid medium may for example be water and the invention is intended to provide a wave and tidal device that, in shallow water, as well as with small wave heights, utilizes water energy, and exploits the water particles' almost circular movements underneath the water surface.
The vertical profile is supplemented to the up and down motion in the water with assistance from the horizontally mounted profile.

The selected aerofoil adjusts automatically to the number of degrees that provides the best lift expressed in lateral movement with respect to the relative particle flow of a passing fluid medium, which leads to the vertical profile moving laterally until it gets such a high angle of attack that the lateral lift momentarily ceases. The areofoil can be controlled to change its angle of attack or angle of incident by a servo or a step motor, an electromagnetic pulse or similar actuators, when the areofoil is in one of its outer positions. Like an airplane wing profile, depending on the angle of incidence of the profile in relation to incoming fluid particles, the particles will travel faster over one of the two sides of the profile. On the side where the particles are traveling faster there will be created an under pressure relative the pressure on the adjacent/opposed side. The under pressure results in a so-called lift which pull the profile in the direction of the under pressure, as in analogy with an airplane lifting from the ground.

As the aerofoil profile is pulled in the direction of the under pressure it will also move against the current of passing particles in the fluid medium it is submerged. As the profile do so, the angle of incidence relative the passing current will change and the profile will reach a critical point in a lateral or vertical direction where the profile stall in movement at a critical angle of incidence.

Also, as the lateral or vertical movements of the profiles are ultimately bound by the lever arm, the profiles will reach a critical point where the lever arm stalls in further movement.

At the two points of stall, the first and the second position or at any point during the sweep of the profile, a control system may assist in changing the angle of incidence of the vertical profile in relation to the passing current or particles such that there is again underpressure at the inner side of said vertical profile whereby the lateral movement of the profile changes direction. The inner side is here to be understood as the side of the profile which faces a position of the profile wherein the lever arm is aligned with the current of the passing flow which is the centre of a sweep. The lift is defined as a force pulling the profile in the direction of under pressure. The above described sequence of events results in that the vertical profile performs an oscillating movement in that it sweeps back and forward between a first and a second position. The length of the sweep, that is the distance between a first and a second position may be influenced by the size of a wave or the current of passing fluid particles or controlled by the control system.

The vertical movement of the lever arm may result from a passing wave pushing the buoyant vertical profile upwards or it may result from a current of particles passing the horizontal profile whereby the horizontal profile moves up and down in analogy with the sequence of events described above in relation to the vertical profile.

The pivoting movements of horizontal profile and the vertical profile around their respective longitudinal axis may be supported and controlled by a rudder stop.

The horizontal profile and the vertical profile are attached at one end of the lever arm and the supporting structure at the other end or said lever arm. This way, the lever arm can move a certain number of degrees vertically while the horizontal profile and the vertical profile will move the lever arm vertically up and down and from 0 to 360 degrees horizontally.

The vertical profile on the lever arm uses the energy in the waves for a lateral movement, while it and the horizontal profile perform a vertical movement which also can be controlled by the wave height.

Due to the design of the vertical profile, it has small resistance against the incoming wave because only a part of said profile is situated below the water surface.

In contrast, the upper part of the float will increase its lift momentarily by a strong wave passage.
The vertical profile may be constructed as a float which has buoyancy. The vertical profile may be constructed such that said horizontal profile is kept at a certain depth or such that said lever arm is maintained at a certain angle in relation to a surface when the profiles are submerged in water.

The horizontal profile, the vertical profile and a small portion of the lever arm will come in contact with the water. Only a small part of the energy installation is therefore exposed to corrosion and fouling. The buoyancy or the vertical profile is adjusted so that it relieves some of design weight of the lever arm, the profile and the float, under and above a water surface.

In the particle flow passage, one side of the vertical profile obtains a critical angle of attack with respect to the incoming wave, which causes a momentary stop or stall in the lift or lateral movement of the horizontal or vertical profile respectively.

The mass weight on the vertical profile is reducing the angle of incidence on the side of the vertical profile where the lift has ceased, while the other side, by itself, adjusts for the best lift caused by the continuous particle flow around the vertical profile. This results in a movement to the opposite side.

The particle flow around the vertical profile accelerates its speed until one of its sides reaches the critical angle of attack and the lift momentary ceases resulting in a lateral movement, where the other side of the vertical profile takes over the lift and reverses the movement of the lever arm until this side of the vertical profile reaches its critical angle of attack and the process is repeated. The vertical profile may be symmetrical or semi-symmetrical.

The swept area may be variable by means including but not exclusively limited to: a rudder stop as a physical limitation of the number of degrees where the vertical or horizontal profile meets the incoming wave; modified length of the lever arm on which the vertical profile is mounted; by adjusting the surface area of the vertical profile, shape or aspect ratio (surface area of the profile selected in relation to the wind conditions where the installation is intended to be placed). This is due to static balance of the system i.e. by a counterweight.

The movement of the vertical profile is a result of the water particles' flow around the profile and is pre-determined. The profile will always be self-aligning to the wave direction, also by irregular waves due to the attachment being at the centre of axis going through point of lift of the profile. The vertical profile follows, depending on the length of the lever arm where the vertical profile is mounted, the water surface according to the tides. In the event of a storm the lever arm may be kept safe over the water or submerged in the water. This may for example be done by a hydraulic or magnetic brake or any suitable configuration described in the prior art.

In any of the embodiments the energy installation may be equipped with a control system. The control system may control the inclination angle of the aerofoil profiles. By means of the control system the length of the sweep, also called the work area, can be controlled with the option of variable power output from the energy installation from the same wind or ocean current conditions. The lever arm movements are transferred to the supporting construction from which the energy is transferred via existing methods known in the prior art.

In any of the embodiments, the control system may comprise a servo or rudder configuration which may control or support the pivot movements of the profiles which give rise to different angles of incidence. Such servo or rudder configuration may for example be mounted on to the lever arm or any other suitable position and control the pivot movements of the profiles by means of a e.g. a rod connected to the servo and the relevant profile to be controlled. There may also be more than one servo configurations controlling the individual profiles or one servo controlling more than one profile.

Any embodiment of the invention may comprise a transmission system. The transmission system may be mechanically connected to the lever arm such that horizontal and vertical movements of the lever arm may be transferred e.g. to a pump or generator.

Any embodiment of the invention may comprise sensors and means of communication. Sensors may include pressure sensors, temperature sensors, flow sensors, or accelerometers. Said sensors may be used to provide said control system with input data then used in conjunction with the control of the energy installation or such data may be logged or communicated to a remote position. Means of communication may wireless or non-wireless and be used as means such that the energy installation can be controlled or monitored by remote.

An advantage of the invention over the prior art is that it works in both small and high waves and at low water depth. The installation also has a cost effective construction and easier servicing.

The wave and tidal converters described may as an example be mounted on shore with easy access to the infrastructure, installation and servicing.

The noise of the wave passage and the impact of the profiles are limited, compared to other known installations because the vertical profile is designed to have a small hydrodynamic or aerodynamic resistance.

The converters' low vertical rate and horizontal movement is not expected to impact aquatic life.
The profiles are not exposed to the same violent forces as other known installations because of the installations' low resistance.

In said aspects of the invention, the produced energy may be converted to, for example, electricity or pump functions (drinking water from wells, irrigation of crops with water from rivers, lakes or the sea) by means of a generator coupled with the transmission system of the energy installation.

The aerofoil shape of the profiles may be symmetrical or asymmetrical. The invention can therefore be used in relatively small sizes in comparison to the surrounding terrain.
The shadow effect and light reflection are therefore extremely limited.

The invention reacts and works by both wind bursts, turbulent and stable wind conditions. The wind energy converter is self-righting in the wind and has a high starting torque. The low operation speed results in reduced wind noise. The invention has low form drag and slow operating speed compared to rotary profile with typical high peripheral speed

The wind energy converter will, at the recommended size and operation, be an easy construction in, for example, metal or composite materials.

### Brief description of drawings

Photo A illustrates an embodiment of the invention.

Photo B illustrates an embodiment of the invention wherein the energy installation is a wind energy installation.
Figure 1 illustrates an embodiment wherein the invention is a wave or tidal energy installation seen from a side view.
Figure 2 illustrates an embodiment wherein the invention is a wave or tidal energy installation seen from above.
Figure 3 illustrates an embodiment wherein the invention is a wind energy installation seen from a side view.
Figure 4 illustrates an embodiment of the invention comprising a supporting positioning arrangement.

### Detailed description

Photo A illustrates an embodiment of the invention wherein the vertical profile 1A and the horizontal profile 1B are merged into one entity 22.

Photo B illustrates an embodiment of the invention wherein the energy installation is a wind energy installation wherein a control system 20 exerts a mechanical force on the vertical profile (1A) or the horizontal profile (1B) via one or more rods (21).

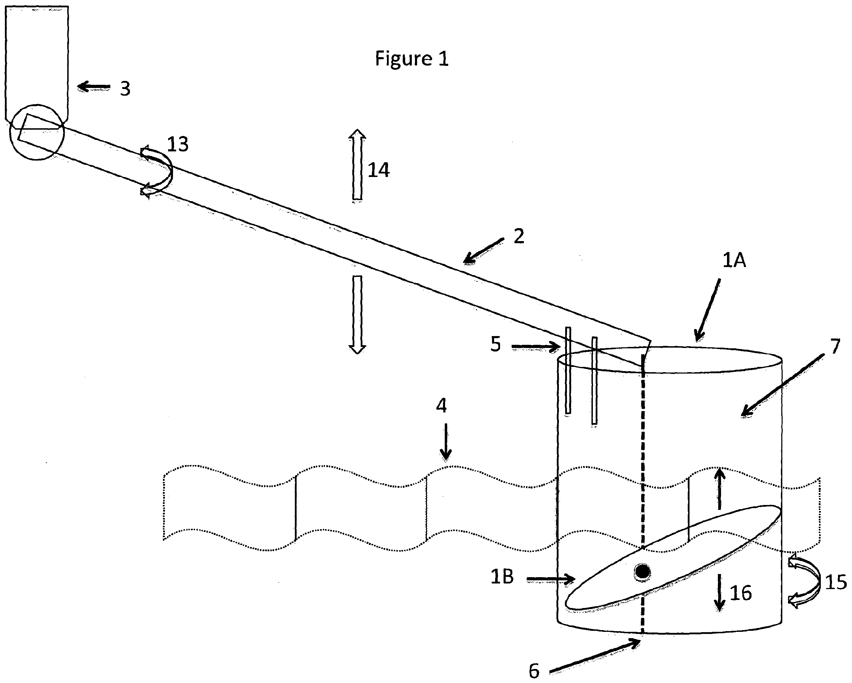

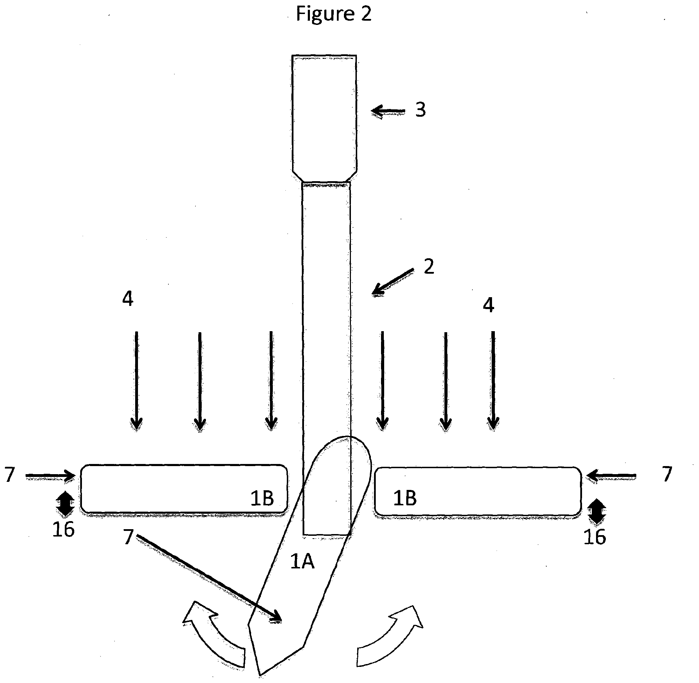

In figure 1 and 2 it is illustrated an embodiment wherein the invention is an energy installation suitable for the capture of wave or tidal energy. The embodiment comprises a support structure 3 which may be attached to any off-shore construction suitable for carrying the energy installation. Pivotally attached to the support structure 3 is a lever arm 2.

In one embodiment, the lever arm 2 has two degrees of freedom at its point of attachment to the support structure 3 and may be pivoted in a vertical direction as indicated by arrows 14 and in a horizontal direction as indicated by arrows 13. The lever arm 2 may pivot in a vertical direction and in horizontal direction simultaneously. In one embodiment the support structure 3 comprises means (not shown), such as magnetic or mechanical, for limiting or decelerating for limiting the horizontal or vertical movement of the lever arm 2.

Attached to the end of the lever arm 2 opposite the support structure 3 is a vertical profile 1A. In one embodiment the vertical profile has the shape of an aerofoil profile or a piece of an airplane profile.

The vertical profile 1A is lowered into water on which a wave 4 is propagating. The vertical profile may be attached to said lever arm 2 at its centre of axis 6. The vertical profile 1A is rotatably attached to said lever arm 2 as indicated by arrows 15 and may rotate around its centre of axis 6 such that the angle of inclination in relation to a propagating wave 4 or passing fluid medium such as water, is changed. The lever arm 2 comprises rudder stop 5 which limits or control the angle of inclination of said vertical profile 1A.

In one embodiment said rudder stop 5 comprises one or more servos which may support or control the movements of the vertical profile 1A.

Attached to each side the vertical profile 1A is a horizontal profile 1B. Said horizontal profile 1B may rotate around its centre of axis as indicated by arrows 16.

The profiles 1A and 1B may be constructed from materials such as composite, glass fibre, metal or plastic. The vertical profile 1A or the horizontal profile 1B may be designed to have buoyancy sufficient to support the weight of said lever arm and said horizontal profile or vertical profile in that said profiles are kept buoyant at a certain level in the water, for example immediately below the surface.

In one embodiment of the invention, the wave and tidal energy installation may comprise more than one vertical profile 1A arranged in parallel.

The vertical profile 1A and the horizontal profile 1B have a respective mass weight 7.

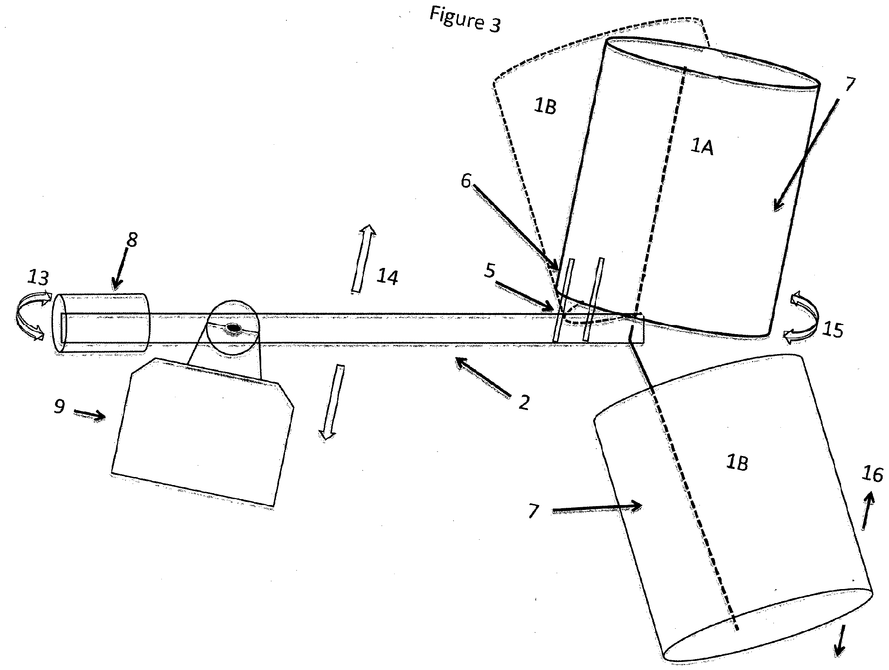

In figure 3 it is illustrated an embodiment wherein the invention is an energy installation suitable for the capture of wind energy. The embodiment comprises a support structure 3 and a machine housing 9 which may be attached to any construction suitable for carrying the energy installation. In one embodiment the energy installation is positioned on a tower construction. Pivotally attached to the support structure 3 is a lever arm 2.

In one embodiment, the lever arm 2 has two degrees of freedom at its point of attachment to the support structure 3 and may be pivoted in a vertical direction as indicated by arrows 14 and in a horizontal direction as indicated by arrows 13. The lever arm 2 may pivot in a vertical direction and in horizontal direction simultaneously. In one embodiment the support structure 3 comprises means (not shown), such as magnetic or mechanical, for limiting or decelerating the horizontal or vertical movement of the lever arm 2.

Attached to the end of the lever arm 2 opposite the support structure 3 is a vertical profile 1A. In one embodiment the vertical profile has the shape of an aerofoil profile or a piece of an airplane profile.

The vertical profile may be attached to said lever arm 2 at its centre of axis 6. The vertical profile 1A is rotatably attached to said lever arm 2 as indicated by arrows 15 and may rotate around its centre of axis 6 such that the angle of inclination in relation to a passing fluid medium such as air, is changed. The lever arm 2 comprises rudder stop 5 which limits or control the angle of inclination of said vertical profile 1A.

In one embodiment said rudder stop 5 comprises one or more rods or like which may limit the movements of the vertical profile 1A.

Attached to each side the vertical profile 1A is a horizontal profile 1B. Said horizontal profile 1B may rotate around its centre of axis as indicated by arrows 16.

The profiles 1A and 1B may be constructed from materials such as composite, glass fibre, foam, metal or plastic. In one embodiment of the invention, the wind energy installation may comprise more than one vertical profile 1A arranged in parallel.

The vertical profile 1A and the horizontal profile 1B have a respective mass weight 7.

The wind energy installation support structure 3 may be positioned on or below ground level. The supporting structure 3 and machine housing 9 will not be described in details as such systems are well known in the prior art.

In figure 3, the embodiment of wind energy installation, the lever arm 2 may work as an extension of the installation tower (not shown) and can be moved vertically a number of degrees. As a result, depending on the wind conditions, the lever arm 2 can increase or decrease the height of the tower and thus the swept area as well as rotate horizontally 0-360 degrees.

Lowered to ground level, the lever arm 2 works as a storm safe site. The construction weight of the lever arm is statically balanced by a counterweight 8 mounted close to the bearing structure (not shown) or machine housing 9.

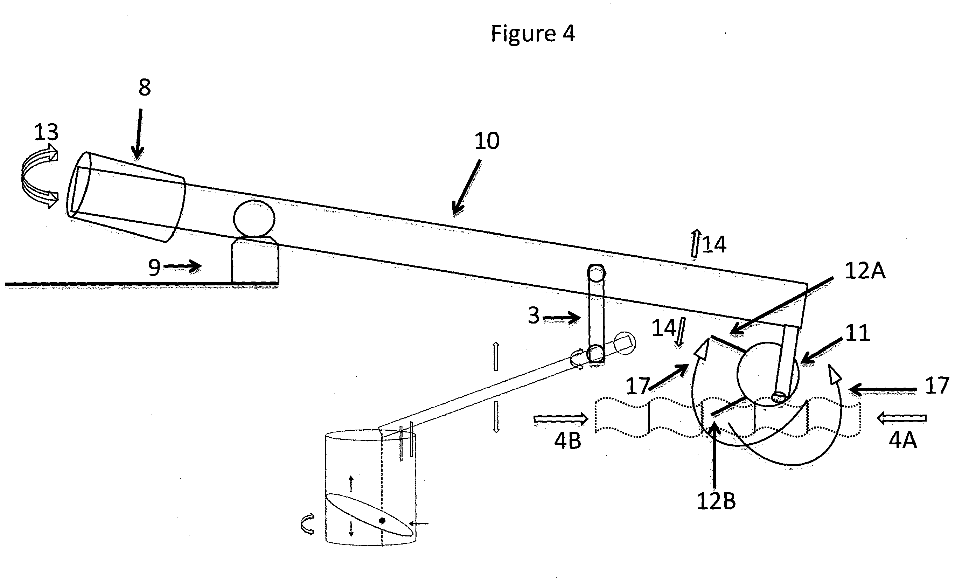

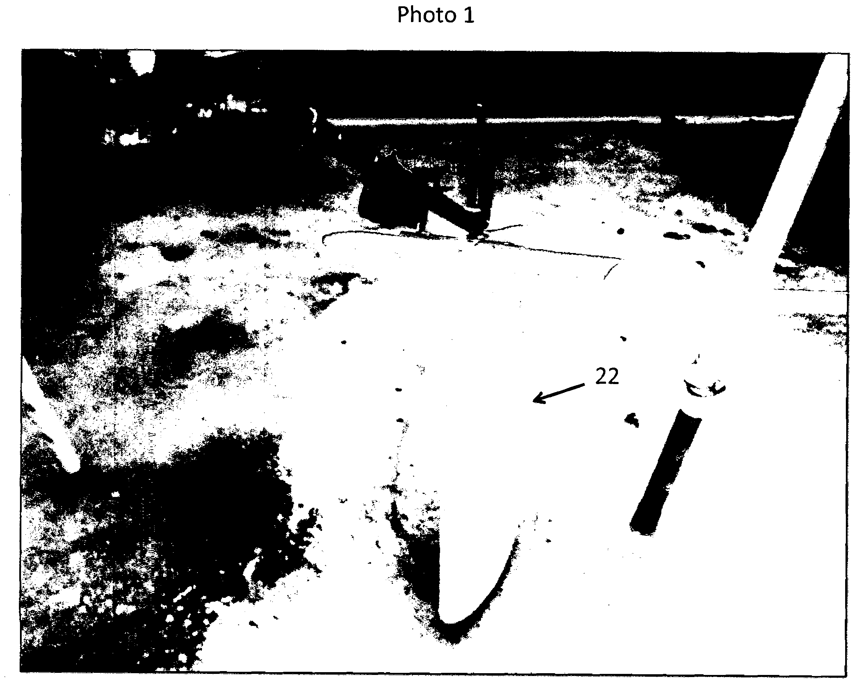

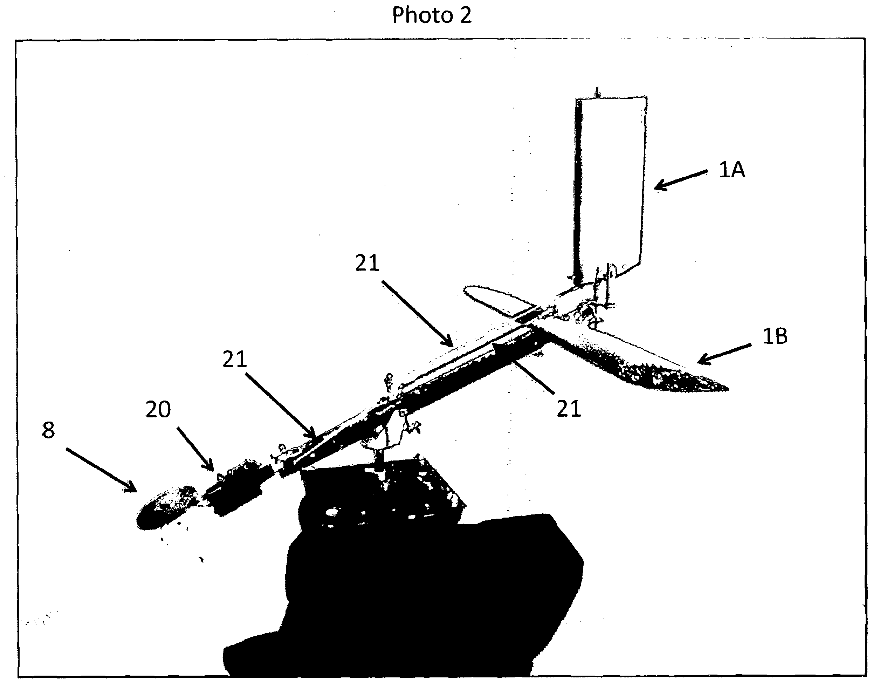

Figure 4 show one embodiment of the invention wherein the energy installation is configured on a supporting positioning arrangement, said arrangement comprising a support lever 10 pivotally attached to a machine housing 9. Said support lever 10 has a counterweight 8 attached in one end and a float 11 attached to its opposite end. In one embodiment, said float 11 comprises a buoyant cylinder which features an eccentric and rotatable attachment such that a first wave 4A propagating in a first direction will use a first wave plate 12A as leverage such that a first rotation of said cylinder is achieved as indicated by arrows 17. In analogy with the described sequence of events, a second wave propagating in a second direction which is opposite the direction of said first wave 4A will use a second wave plate 12B as leverage to rotate said cylinder in a second rotation which is opposite said first rotation. The resulting rotations of the cylinder may be transferred to the machine house and converted to e.g. electrical energy or used to drive a pump according to any suitable method found in the prior art.

In an embodiment the float 11 is configured in such a way that the wave plates 12A, 12B are positioned with offset distances to the excentric attachment of the float 11 to the support lever 10 in order to achieve a higher lift from a wave propagating in a second direction in relation to the lift from a first wave 4A propagating in a first direction.

The float 11 will also contribute to the energy by normal movement up and down due to boyancy. The resulting movement of the support lever 10 may be transferred directly to the machine house 9 and converted to e.g. electrical energy or used to drive a pump according to any suitable method found in the prior art.

The embodiment shown in figure 4 further comprises a support structure 3 onto which an embodiment of the invention as has been previously described is pivotally attached.

### Definitions

### Aerofoil/Profile:

A body shaped symmetric or asymmetric as a section of an aeroplane profile.

### Critical angle of incidence:

The profile angle relative to the particle flow, where the lift is destroyed by turbulence.

## Claims

1. An energy installation comprising one or more aerofoil profiles having a longitudinal axis oriented vertically, said profile being configured on a rotatable lever arm, a support structure comprising a transmission system where said vertical profile (1A) may rotate around its longitudinal axis and in that said lever arm (2) and said vertical profile (1A) may oscillate between a first and a second horizontal positions by means of a flow of particles acting on said vertical profile (1A) such that a horizontal movement of said vertical profile (1A) is achieved and transmitted to said transmission system via said lever arm (2), **characterized in that** said lever arm (2) may tilt in a vertical direction and **in that** one or more aerofoil profiles (1B) having a longitudinal axis oriented horizontally are configured on said vertical profile (1A), said horizontal profile (1B) being rotatable around its longitudinal axis and by that said horizontal profile (1B) may oscillate between a first and a second vertical positions by means a flow of particles acting on said horizontal profile (1B) such that a vertical movement of said horizontal profile (1B) is achieved and transmitted to said transmission system via said lever arm (2).

2. An energy installation according to claim 1, **characterized in that** it comprises a control system (20) and **in that** said control system (20) may control the inclination of said vertical profile (1A) or horizontal profile (1B) by exerting mechanical force on said vertical profile (1A) or said horizontal profile (1B).

3. An energy installation according to any preceding claim 1 or 2, further **characterized in that** it comprises more than one vertical profile (1A).

4. An energy installation according to any preceding claim 1 or 2, further **characterized in that** said vertical profile (1A) and said horizontal profile (1b) constitute one entity.

## Patentansprüche

1. Energieinstallation, umfassend eine oder mehrere Tragflächenprofile, die eine vertikal ausgerichtete Längsachse aufweisen, welches Profil an einem drehbaren Hebelarm ausgebildet ist, eine Stützstruktur, welche ein Übertragungssystem umfasst, wobei das vertikale Profil (1A) um seine Längsachse drehen kann, und dass der Hebelarm (2) und das vertikale Profil (1A) zwischen einer ersten und einer zweiten Horizontalposition mittels einer Strömung von Partikeln oszillieren können, die auf das vertikale Profile (1A) derart einwirken, dass eine Horizontalbewegung des vertikalen Profils (1A) erreicht und an das Übertragungssystem über den Hebelarm (2) übertragen wird, **dadurch gekennzeichnet, dass** sich der Hebelarm (2) in einer Vertikalrichtung neigen kann, und dass ein oder mehrere Tragflächenprofile (1B) mit einer horizontal ausgerichteten Längsachse auf dem vertikalen Profil (1A) ausgebildet sind, wobei das horizontale Profil (1B) um seine Längsachse drehbar ist, und dass das horizontale Profil (1B) zwischen einer ersten und einer zweiten Vertikalposition mittels einer Strömung von Partikeln oszillieren kann, die auf das horizontale Profil (1B) derart einwirken, dass eine Vertikalbewegung des horizontalen Profils (1B) erreicht und an das Übertragungssystem über den Hebelarm (2) übertragen wird.

2. Energieinstallation nach Anspruch 1, **dadurch gekennzeichnet, dass** sie ein Steuersystem (20) umfasst, und dass das Steuersystem (20) die Neigung des vertikalen Profils (1A) oder horizontalen Profils (1B) steuern kann, indem eine mechanische Kraft auf das vertikale Profil (1A) oder das horizontale Profil (1B) ausgeübt wird.

3. Energieinstallation nach einem der vorhergehenden Ansprüche 1 oder 2, ferner **dadurch gekennzeichnet, dass** sie mehr als ein vertikales Profil (1A) umfasst.

4. Energieinstallation nach einem der vorhergehenden Ansprüche 1 oder 2, ferner **dadurch gekennzeichnet, dass** das vertikale Profil (1A) und das horizontale Profil (1b) eine Einheit ausbilden.

## Revendications

1. Installation d'énergie comprenant un ou plusieurs profils d'aile ayant un axe longitudinal orienté verticalement, ledit profilé étant configuré sur un bras de levier rotatif, une structure de support comprenant un système de transmission, ledit profilé vertical (1A) pouvant tourner autour de son axe longitudinal, et en ce que ledit bras de levier (2) et ledit profil vertical (1A) peuvent osciller entre une première et une deuxième positions horizontales au moyen d'un flux de particules agissant sur ledit profil vertical (1A) si bien qu'un mouvement horizontal dudit profil vertical (1A) est achevé et transmis audit système de transmission via ledit bras de levier (2), **caractérisée en ce que** ledit bras de levier (2) peut s'incliner dans une direction verticale et **en ce qu'**un ou plusieurs profils d'aile (1B) présentant un axe longitudinal orienté horizontalement sont configurés sur ledit profil vertical (1A), ledit profil horizontal (1B) pouvant tourner autour de son axe longitudinal et par ce que ledit profil horizontal (1B) peut osciller entre une première et une deuxième positions verticales au moyen d'un flux de particules agissant sur ledit profil horizontal (1B) si bien qu'un mouvement vertical dudit profil horizontal (1B) est achevé et transmis audit système de transmission via ledit bras de levier (2).

2. Installation d'énergie selon la revendication 1, **caractérisée en ce qu'**elle comprend un système de commande (20) et **en ce que** ledit système de commande (20) peut commander l'inclinaison dudit profil vertical (1A) ou dudit profilé horizontal (1B) en exerçant une force mécanique sur ledit profil vertical (1A) ou ledit profil horizontal (1B).

3. Installation d'énergie selon l'une quelconque des revendications précédentes 1 ou 2, **caractérisée en outre en ce qu'**elle comprend plus d'un profil vertical (1A).

4. Installation d'énergie selon l'une quelconque des revendications précédentes 1 ou 2, **caractérisée en outre en ce que** ledit profil vertical (1A) et ledit profil horizontal (1b) constituent une entité.
